# EUROPEAN PATENT APPLICATION

(11) **EP 2 141 068 A1**
(43) Date of publication of application: **06.01.2010**
(21) Application number: 08171259.8
(22) Date of filing: 10.12.2008
(51) Int. Cl.: B62M 6/75

(54) **Electric bicycle**

(30) Priority: 30.06.2008 CN 200810050898
(71) Applicant: Chen, Chuan Sheng, Taipei (TW)
(72) Inventor: Chen, Chuan Sheng, Taipei (TW)
(74) Representative: Carpintero Lopez, Francisco

(57) **Abstract**

An electric bicycle is formed by user-manipulatively mounting a power driving assembly to a regular bicycle. The power driving assembly includes a driving gear (1), a flat motor (2), a battery set (4), an operation knob (5), and a transmission gear train (3). The driving gear (1) is mounted to spokes (61) of a bicycle wheel (6) and is concentric with respect to an axle of the wheel. The flat motor (2) is mounted to a frame (62) of the wheel (6). The battery set (4) is received in a casing, which is mounted to a frame of the bicycle and the operation knob (5) is mounted on a handlebar of the bicycle or other suitable locations to control a switch (22) of the flat motor (2), which transmits the power generated by the flat motor (2) through the transmission gear train (3) to drive the driving gear (1) and thus controlling forwarding and stopping of the bicycle wheel (6), thereby realizing the operation and function of the electric bicycle.

## Description

### BACKGROUND OF THE INVENTION

### (a) Technical Field of the Invention

The present invention relates to an electric bicycle, and in particular to an electric bicycle comprising a simple power driving assembly that can be easily and user-manipulatively mounted to a regular bicycle to convert the regular bicycle into an electric bicycle.

### (b) Description of the Prior Art

A conventional electric bicycle comprises a motor and a battery set to serve as a power driving unit, which is mounted to a regular bicycle to convert the regular bicycle into an electric bicycle. Since a regular motor and the associated battery set occupy a substantial amount of space and have a substantial weight, it is generally not possible for a bicycle user to mount the motor and the battery to a bicycle by himself or herself. Thus, the general consumers are prevented from selecting their preferred bicycle model or riding a bicycle fit them and it is also not possible for the general consumers to additionally mount the power driving unit to their own regular bicycles to make an electric bicycle. Apparently, the conventional electric bicycle cannot satisfy the needs of the general consumers and, in addition, the riding burden and consumption of power are both increased, making the costs high and inducing damage to the environment. These are the major drawbacks of the conventional electric bicycles.

### SUMMARY OF THE INVENTION

The primary purpose of the present invention is to to provide an electric bicycle, which can be formed by user-manipulatively mounting a power driving assembly to a regular bicycle and the power driving assembly comprises a driving gear, a flat motor, of which details are disclosed in a co-pending application that was filed as a patent application by the present applicant and is now issued a patent, a battery set, an operation knob, and a transmission gear train. The driving gear is mounted to spokes of a bicycle wheel and is concentric with respect to an axle of the wheel. The flat motor is mounted to a frame of the wheel. The battery set is received in a casing, which is mounted to a frame of the bicycle and the operation knob is mounted on a handlebar of the bicycle or other suitable locations to control a switch of the flat motor, which transmits the power generated by the flat motor through the transmission gear train to drive the driving gear and thus controlling forwarding and stopping of the bicycle wheel, thereby realizing the operation and function of the electric bicycle. The present invention allows an electric bicycle to be formed by simply and easily and user-manipulatively mounting a power driving assembly to a regular bicycle and allows the user to select the preferred model or a bicycle model suitable for the user's riding, or it is even possible to mount the assembly to a bicycle that is currently used by the user to make the electric bicycle to thereby substantially reduce the costs. The flat motor used in the electric bicycle of the present invention is of the features of having a thin and flat configuration and light weight. Thus, the structure of the electric bicycle in accordance with the present invention has never been proposed heretofore and has the advantages of labor and power saving and easy mounting and maintenance.

In view of the drawbacks that a conventional electric bicycle uses a regular motor and a power set to serve as a power driving device thereof, which prevents a user from making an electric bicycle by mounting the power driving device to a regular bicycle and also makes it impossible for the user to select a preferred model of bicycle or a bicycle suitable for riding.

The foregoing object and summary provide only a brief introduction to the present invention. To fully appreciate these and other objects of the present invention as well as the invention itself, all of which will become apparent to those skilled in the art, the following detailed description of the invention and the claims should be read in conjunction with the accompanying drawings. Throughout the specification and drawings identical reference numerals refer to identical or similar parts.

Many other advantages and features of the present invention will become manifest to those versed in the art upon making reference to the detailed description and the accompanying sheets of drawings in which a preferred structural embodiment incorporating the principles of the present invention is shown by way of illustrative example.

### BRIEF DESCRIPTION OF THE DRAWINGS

Figure 1 is a schematic view illustrating positional and assembling relationship among components of a power driving device in accordance with the present invention;
Figure 2 is a side elevational view illustrating mounting of the present invention to a bicycle; and
Figure 3 is a schematic view illustrating an electric bicycle formed by properly mounting the present invention thereto.

### DETAILED DESCRIPTION OF THE PREFERRED EMBODIMENTS

The following descriptions are of exemplary embodiments only, and are not intended to limit the scope, applicability or configuration of the invention in any way. Rather, the following description provides a convenient illustration for implementing exemplary embodiments of the invention. Various changes to the described embodiments may be made in the function and arrangement of the elements described without departing from the scope of the invention as set forth in the appended claims.

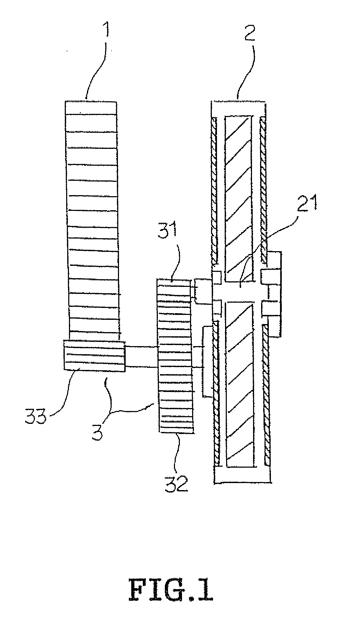

As shown in Figure 1, the electric bicycle in accordance with the preset invention is formed by combining a power driving assembly to a bicycle. The power driving assembly comprises the following primary constituent components/parts: a driving gear 1, a flat motor 2, a transmission gear train 3, a battery set 4, and an operation knob 5.

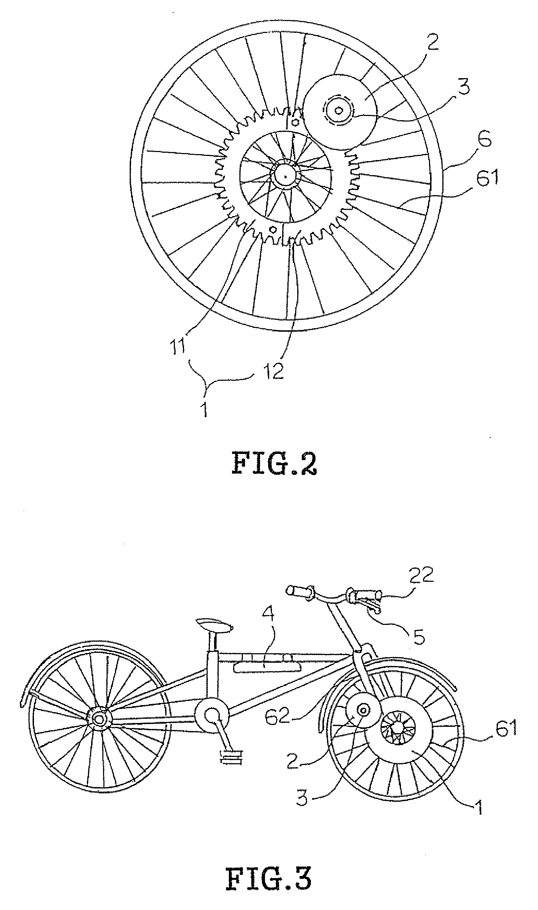

A shown in Figure 2, the driving gear 1 is mounted to spokes 61 of a bicycle wheel 6 and is concentric with respect to an axle of the bicycle wheel so that the mounting is easy and convenient. In a practical application, the driving gear 1 can be formed by combining two semi-circular toothed sections 11, 12 and a jointing surface comprises a spoke slot design to ensure the stability and reliability of jointing. The flat motor 2 is fixed to a frame 62 for the bicycle wheel.

Referring to Figure 1, the transmission gear train 3 is comprised of a first transmission gear 31 mounted to a power output spindle 21 of the flat motor 2, a speed-change gear 32 mating the first transmission gear, and a second transmission gear 33 mounted to a shaft of the speed-change gear. The power output from the motor is transmitted from the first transmission gear 31 to the speed-change gear 32 and is further transmitted from the second transmission gear 33 mounted on the speed-change gear shaft to the driving gear 1.

As shown in Figure 3, the battery set 4 is contained in a casing and the casing is preferably mounted to a position on any portion of the bicycle frame, but can also be mounted to other locations to ensure easy mounting/dismounting and portably carrying, whereby losing of the battery set can be avoided and recharging can be easily done.

The operation switch 5 is arranged on a handlebar of the bicycle or other suitable locations. A switch 22 of the motor is preferably set in an operational relationship with the operation knob 5 in order to allow the operation knob 5 to control the motor switch 22.

To conclude, in the electric bicycle in accordance with the present invention, the power driving assembly features small size, light weight, and easy and convenient mounting, and can be mounted to a preferred bicycle or a bicycle that is suitable to a user. The power driving assembly can be mounted to either the front wheel or the rear wheel with a handlebar carrying the operation knob to simplify the control and operation thereof In addition, in case that the battery set runs out of power, the bicycle can be operated in the same way as a regular bicycle. Apparently, the present invention features low costs and high performance and easy mounting and maintenance.

It will be understood that each of the elements described above, or two or more together may also find a useful application in other types of methods differing from the type described above.

While certain novel features of this invention have been shown and described and are pointed out in the annexed claim, it is not intended to be limited to the details above, since it will be understood that various omissions, modifications, substitutions and changes in the forms and details of the device illustrated and in its operation can be made by those skilled in the art without departing in any way from the spirit of the present invention.

## Claims

1. An electric bicycle comprising a power driving assembly selectively mounted to one of the wheels, front or rear, of a bicycle and
**characterized in that** the power driving assembly comprises:
a driving gear mounted to spokes of the wheel and concentric with respect to an axle of the wheel;
a flat motor mounted to a frame of the wheel;
a transmission gear train coupled between the flat motor and the driving gear, power generated by the flat motor being transmitted through the transmission gear train to drive the driving gear;
a battery set received in a casing, which is mounted to a frame of the bicycle to facilitate mounting/dismounting and carrying; and
an operation knob mounted on a handlebar of the bicycle or other suitable locations to form an operational relationship with a switch of the flat motor whereby the motor switch is controllable by the operation knob.

2. The electric bicycle as claimed in Claim 1, wherein the transmission gear train comprises a first transmission gear mounted to a power output spindle of the flat motor, a speed-change gear mating the first transmission gear, and a second transmission gear mounted to a shaft of the speed-change gear, whereby the power from the motor is transmitted from the first transmission gear to the speed-change gear and is further transmitted from the second transmission gear mounted on the speed-change gear shaft to drive the wheel.

3. The electric bicycle as claimed in Claim 1, wherein the driving gear is formed by combining two semi-circular toothed sections.

4. The electric bicycle as claimed in Claim 1, wherein a jointing surface of the spoke comprises a spoke slot design to ensure the stability and reliability of jointing.

5. The electric bicycle as claimed in Claim 2, wherein a jointing surface of the spoke comprises a spoke slot design to ensure the stability and reliability of jointing.
